(19) Europäisches Patentamt
European Patent Office
Office européen des brevets

(11) Numéro de publication : **0 442 796 A1**

(12) **DEMANDE DE BREVET EUROPEEN**

(21) Numéro de dépôt : **91400336.3**

(51) Int. Cl.$^5$ : **G02F 1/01**

(22) Date de dépôt : **12.02.91**

(30) Priorité : **16.02.90 FR 9001877**

(43) Date de publication de la demande : **21.08.91 Bulletin 91/34**

(84) Etats contractants désignés : **DE GB**

(71) Demandeur : **THOMSON-CSF**
**51, Esplanade du Général de Gaulle**
**F-92800 Puteaux (FR)**

(72) Inventeur : **Esselin, Sophie**
**THOMSON-CSF, SCPI, Cedex 67**
**F-92045 Paris la Défense (FR)**
Inventeur : **Broussoux, Dominique**
**THOMSON-CSF, SCPI, Cedex 67**
**F-92045 Paris la Défense (FR)**
Inventeur : **Le Barny, Pierre**
**THOMSON-CSF, SCPI, Cedex 67**
**F-92045 Paris la Défense (FR)**
Inventeur : **Robin, Philippe**
**THOMSON-CSF, SCPI, Cedex 67**
**F-92045 Paris la Défense (FR)**

(74) Mandataire : **Guérin, Michel et al**
**THOMSON-CSF SCPI**
**F-92045 PARIS LA DEFENSE CEDEX 67 (FR)**

(54) **Composant optique pour applications en optique intégrée.**

(57) La présente invention concerne un composant optique pour applications en optique intégrée, ce composant étant élaboré sur un substrat (1) qui supporte un empilement de trois couches polymères : une couche inférieure (2) déposée sur le substrat, une couche centrale (3) et une couche supérieure (4), les couches inférieure et supérieure possédant des indices optiques inférieurs à celui de la couche centrale qui est électrooptique et destinée à véhiculer un faisceau lumineux, au moins une couche, la couche centrale, la couche inférieure ou la couche supérieure, possédant des zones ayant des indices le valeurs différentes pour créer une zone de confinement (6) du faisceau lumineux dans la couche centrale (3).

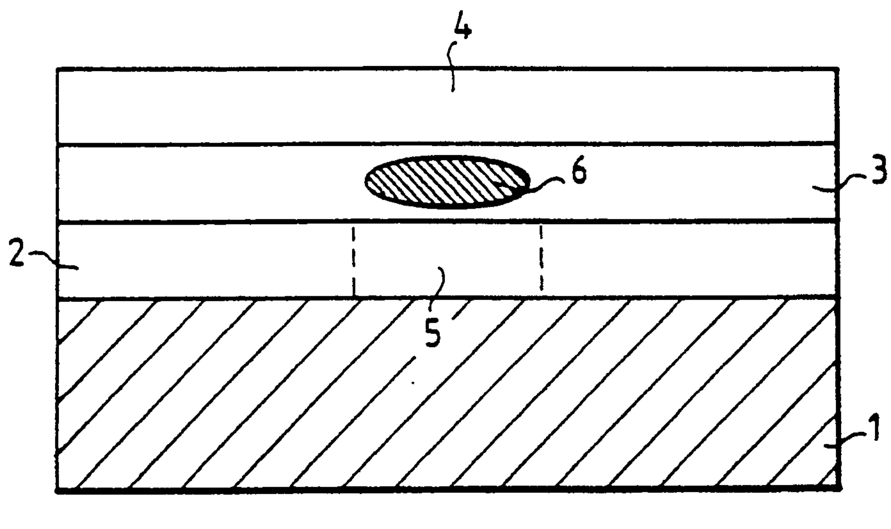


FIG. 2

EP 0 442 796 A1

# COMPOSANT OPTIQUE POUR APPLICATIONS EN OPTIQUE INTEGREE

La présente invention concerne des composants optiques pour applications en optique intégrée. Ces composants peuvent être des composants actifs ou passifs tels que les générateurs de seconde harmonique, les modulateurs électrooptiques, les coupleurs électrooptiques ou les interrupteurs électrooptiques à n entrées et n sorties.

On connaît des générateurs de seconde harmonique pour optique intégrée formés de structures à base de niobate de lithium $LiNbO_3$ ou de matériaux organiques. Ces structures sont constituées par une succession de microdomaimes au pas égal à la longueur de cohérence $lc = \frac{\lambda}{4}(n^{2\omega}-n^{\omega})$ et dont chaque domaine est polarisé en sens inverse du domaine voisin ce qui permet d'obtenir un recouvrement partiel des phases de l'onde incidente (de pulsation ω) et de l'onde créée (de pulsation 2 ω). Il est possible notamment de doubler la fréquence infrarouge ($\lambda$ = 0, 86 μm) pour obtenir une lumière bleue ($\lambda$ = 0,43 μm) avec une structure de $LiNbO_3$ composée d'une centaine de domaines (voir l'article " Second harmonic generation of blue light in periodically poled lithium niobate" de G. A. MAGEL, M.M. FEJER et R. L. BYER, CLEO '89 / Thursday Afternoon / 350). On sait également qu'il est possible de réaliser une structure organique génératrice de lumière rouge ($\lambda$ = 0,63 μm) et composée de 300 microdomaines inversées (voir l'article "Phase matched second harmonic generation in a polymeric waveguide" de G. KHANARIAN, D. HAAS, R. KEOSIAN, D. KARIM et P. LANDI, CLEO '89 / Thursday Morning / 254).

En ce qui concerne les interrupteurs et les modulateurs électrooptiques pour optique intégrée, on utilise principalement des structures complexes sur $LiNbO_3$ où les guides optiques sont matérialisés par dopage au titane. Cependant, puisqu'il n'est pas possible d'obtenir de couche mince de $LiNbO_3$ monocristalline, on ne peut pas réaliser de structure de modulateur électrooptique à électrodes en regard. Les électrodes sont alors disposées de façon coplanaire, ce qui réduit l'efficacité du niobate de lithium.

Récemment, un premier modulateur électrooptique à base de polymère a été développé et publié par LOCKHEED MISSILES AND SPACE COMPANY, INC (Organic Integrated Optical Devices ; R. LYTEL, G.F. LIPSCOMB, M. STILLER, J.I. THACKARA, A.J. TICKNOR). Il a été montré qu'il est possible de confiner latéralement la lumière par simple polarisation localisée d'une couche active. La variation d'indice obtenu est de l'ordre de $10^{-3}$ à $5.10^{-2}$ ce qui est suffisant pour obtenir un confinement latéral.

La présente invention concerne la réalisation de composants optiques pour des applications en optique intégrée telles que la modulation de la lumière et la génération de seconde harmonique par le biais d'empilements de 3 couches de polymère judicieusement choisies. Deux de ces couches sont passives et d'indice optique suffisamment faible pour confiner le mode optique dans la couche centrale d'indice optique élevé et composée d'un matériau actif. En jouant localement sur l'indice d'une des 3 couches, on obtient un confinement latéral de l'onde lumineuse.

L'invention a donc pour objet un composant optique pour applications en optique intégrée, ce composant étant élaboré sur un substrat, caractérisé en ce que le substrat supporte un empilement de trois couches polymères : une couche inférieure déposée sur le substrat, une couche centrale et une couche supérieure, les couches inférieure et supérieure possédant des indices optiques inférieurs à celui de la couche centrale qui est électrooptique et destinée à véhiculer un faisceau lumineux, au moins une couche, la couche centrale, la couche inférieure ou la couche supérieure, possédant des zones ayant des indices de valeurs différentes pour créer une zone de confinement du faisceau lumineux dans la couche centrale.

L'invention sera mieux comprise et d'autres avantages apparaîtront à la lecture de la description qui va suivre, donnée à titre d'exemple non limitatif, et grâce aux dessins annexés parmi lesquels :

- les figures 1 et 2 représentent des structures tricouches selon l'invention,
- les figures 3 et 4 représentent des formules chimiques de polymères utilisables pour former des couches passives dans les structures tricouches selon l'invention,
- la figure 5 représente la formule chimique générale d'un copolymère électroactif utilisable pour former des couches actives dans les structures selon l'invention,
- les figures 6 à 11 représentent des variantes du copolymère de la figure 5,
- la figure 12 représente la formule chimique générale d'un autre copolymère électroactif utilisable pour former des couches actives dans les structures selon l'invention,
- la figure 13 représente la formule chimique d'un terpolymère photoréticulable utilisable pour former la couche active dans une structure selon l'invention,
- la figure 14 représente un groupement moléculaire particulier de la formule de la figure 13,
- la figure 15 représente la formule chimique d'un autre copolymère utilisable dans une structure selon l'invention,

– les figures 16 à 20 représentent des formules chimiques de dopants utilisables dans le copolymère de la figure 15,

– la figure 21 représente un modulateur électrooptique selon l'invention.

Selon l'invention, on réalise des guides pour optique intégrée par l'association de 3 couches de polymère, compatibles chimiquement et optiquement, et dont l'adaptabilité de la structure chimique de la couche active permet d'optimiser la structure tricouche obtenue pour une application donnée et une longueur d'onde d'utilisation déterminée. De plus, l'obtention d'un écart d'indice sur une surface matérialisant un guide permet d'obtenir le confinement latéral de l'onde lumineuse de façon simple.

La figure 1 représente, de façon schématique, la structure tricouche selon l'invention. Un substrat 1 supporte un empilement de trois couches : une couche inférieure 2, une couche centrale 3 et une couche supérieure 4. La couche centrale 3 possède des propriétés électrooptiques et une transparence suffisante dans les longueurs d'onde d'utilisation. Les couches inférieure 2 et supérieure 4 possèdent des indices optiques plus faibles que celui de la couche centrale.

Il est facile de déposer ces couches de polymère par enduction à partir d'une solution du polymère dans un solvant. On peut ainsi déposer successivement les trois couches de polymère sur le substrat. Dans ce cas, il faut que la couche inférieure 2 soit insoluble dans le solvant d'enduction de la couche centrale 3 et que le solvant d'enduction de la couche supérieure 4 ne dissolve pas la couche centrale (ou couche active) 3.

Quel que soit le composant optique à réaliser, il existe, pour son utilisation ultérieure (modulateur, coupleur ou interrupteur) une étape d'orientation de la couche centrale 3 qui nécessite l'application d'un champ électrique. L'une des électrodes nécessaires à l'application de ce champ électrique pourra donc être constituée par le substrat 1. On pourra le choisir par exemple en silicium ou en verre recouvert d'une couche d'aluminium ou d'une couche ITO (oxyde mixte d'étain et d'indium).

A ce stade, la structure de la figure 1 permet d'obtenir un guide de lumière plan mais ne permet pas encore de confiner la lumière dans un guide deux dimensions. Mais, en agissant sur l'indice effectif de la couche active 3, c'est-à-dire en augmentant l'indice de la couche inférieure 2 ou de la couche supérieure 4 sur une surface matérialisant la structure guide, on peut confiner la lumière véhiculée par la couche active à certaines zones. C'est ce que représente la figure 2 qui reprend la structure tricouche représentée à la figure 1. Dans cet exemple, la couche inférieure 2 comprend une zone 5, délimitée par des traits interrompus, d'indice plus élevé que dans le reste de la couche 2. Une variation d'indice de l'ordre de $10^{-3}$ peut suffire à induire un confinement de la lumière dans la couche active 3 dans un secteur 6 situé en regard de la zone 5.

Plusieurs méthodes sont possibles pour obtenir dans une même couche polymère une zone d'indice plus élevé que dans le reste de cette même couche.

Une première méthode consiste à irradier différemment des zones de la couche inférieure ou de la couche supérieure pour obtenir des zones à indices différents et ainsi obtenir un confinement. Les zones irradiées posséderont un indice plus élevé que les zones non irradiées.

Une deuxième méthode consiste à polariser localement la couche inférieure ou la couche supérieure si celles-ci sont polarisables, c'est-à-dire si elles possèdent des dipôles aux endroits permettant de matérialiser un guide. En effet, il est possible d'augmenter l'indice par polarisation.

Une troisième méthode consiste à faire diffuser des colorants augmentant l'indice aux endroits voulus par gonflement dans une solution chimique.

On va maintenant décrire quelques exemples de réalisation de structures tricouches selon l'invention.

## EXEMPLE 1

L'exemple 1 concerne l'irradiation d'une structure tricouche dont la couche inférieure 2 est formée à partir d'une résine négative sensible aux rayons X et dont la couche supérieure 4 est formée à partir d'une résine positive.

Les différentes couches polymères peuvent être déposées par la méthode dite à la tournette. On peut ainsi déposer des couches d'environ 1 µm d'épaisseur.

La résine négative constituant la couche 2 peut être un copolymère de méthacrylate de méthyle/méthacrylate d'épithioglycidyle tel que celui représenté à la figure 3 et décrit dans le brevet FR 2 352 007.

La résine positive constituant la couche 4 peut être du poly (méthacrylate de 1, 1 diméthyl 2, 2, 3, 3 tétrafluoropropyle) commercialisé sous la référence FPM 210 et représenté à la figure 4.

L'utilisation de telles couches se justifie par leur faible indice optique ($n < 1,5$) et leur compatibilité avec la couche centrale 3. Ainsi, la couche inférieure 2 n'est pas dissoute par le solvant d'enduction de la couche centrale 3 et la couche supérieure 4 se dépose sans que son solvant d'enduction dissolve la couche centrale.

La couche centrale ou couche active peut être composée de copolymères dont la structure générale est représentée à la figure 5. Il s'agit de copolymères électroactifs pour lesquels : X vaut $CH_3$, H ou Cl, n peut être

nul ou valoir de 2 à 15, y est égal à 1 ou 2 et x est compris entre 0 et 1. D est un atome ou un groupement donneur d'électrons tel que l'oxygène, le soufre, $>N-C_pH_{2p+1}$ avec $0 \leqq p \leqq 3$,

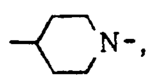 , 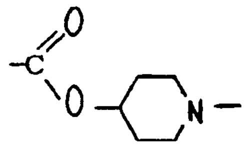 . .

A est un groupement accepteur d'électrons tel que :

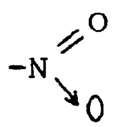 ou 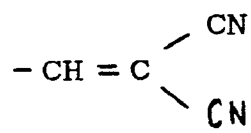

Des variantes de cette structure générale, particulièrement adaptées à l'invention, sont représentées aux figures 6 à 11.

La figure 6 représente la formule du copolymère [méthacrylate de méthyle, 4 (méthacryloyloxypropyloxy) 4' nitrobiphényle]. Les copolymères pour lesquels x = 0,51 et x = 0,268 ont été testés et s'avèrent satisfaisants.

La figure 7 représente la formule du copolymère [méthacrylate de méthyle, 4 (N-méthacryloyloxypropylamino) nitrobenzène]. Le copolymère pour lequel x = 0,236 a été testé et s'avère satisfaisant.

La figure 8 représente la formule du copolymère [méthacrylate de méthyle, 4 (4'-acryloyloxypipéridino) nitro-benzène]. Le copolymère pour lequel x = 0,169 a été testé et s'avère satisfaisant.

La figure 9 représente la formule du copolymère [méthacrylate de méthyle, 4 (méthacryloyloxyhexanoyloxy-pipéridino) nitrobenzène]. Les copolymères pour lesquels x = 0,046 (température de transition vitreuse Tg = 103°C), x = 0,113 (Tg = 100°C), x = 0,2 (Tg = 80°C), x = 0,476 (Tg = 75°C), et x = 1 (Tg = 50°C) ont été testés et s'avèrent satisfaisants.

La figure 10 représente la formule du copolymère [méthacrylate de méthyle, 4 (méthacryloyloxypipéridino) nitrobenzène]. Le copolymère pour lequel x = 0,27 (Tg = 146°C) a été testé et s'avère satisfaisant.

la figure 11 représente la formule du copolymère [méthacrylate de méthyle -4 (méthacryloyloxyéthylthio) 4' nitrobiphényle]. Le copolymère pour lequel x = 0, 25 a été testé et s'avère satisfaisant.

La couche centrale peut encore être composée de copolymères dont la structure générale est représentée à la figure 12. Il s'agit de copolymères électroactifs pour lesquels : X vaut $CH_3$, H ou Cl, x est compris entre 0 et 1 et $2 \leqq n \leqq 15$.

Tous ces copolymères possèdent des coefficients de non-linéarité du second ordre $d_{33}$ compris entre 5 et 30 pm/V sous excitation à 1,06 μm et des maxima d'absorption entre 330 et 420 nm selon qu'ils possèdent un atome d'azote ou de soufre et un ou plusieurs noyaux aromatiques.

La zone de confinement dans la couche active peut être obtenue par irradiation localisée de la couche inférieure créant ainsi des zones d'indice différent dans cette couche.

EXEMPLE 2

L'exemple 2 concerne une structure tricouche dont les couches inférieure et supérieure sont les mêmes que celles de l'exemple 1 mais qui utilise comme couche active le terpolymère photoréticulable aux rayons X dont la formule est représentée à la figure 13. Ce terpolymère est décrit dans la demande de brevet FR 2 630 744. Les paramètres x et z répondent aux relations suivantes :

$$0,25 \leqq \frac{z}{1-x-z} \leqq 0,5 \text{ et } x \leqq 0,3.$$

Le radical X représente $CH_3$, H ou Cl. Le groupement M peut être celui représenté à la figure 14 ou le suivant:

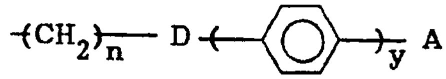

A, D ainsi que les valeurs de n et de y étant les mêmes que ceux annoncées pour la figure 5.

L'avantage d'utiliser ce terpolymère est que tout en augmentant la stabilité d'orientation des molécules

dans le temps par réticulation en volume, on réalise un confinement deux dimensions à l'onde lumineuse en irradiant différemment la zone guide du reste de la couche.

La structure tricouche selon cet exemple peut être réalisée de la manière suivante. La couche inférieure est déposée à partir d'une solution de méthyléthylcétone. On procède à un recuit à 100°C sous vide pendant 1 heure. Cette couche est ensuite irradiée par des rayons X d'énergie 10 mJ/cm². La couche centrale est déposée à partir d'une solution de 1,1,2 trichloroéthane. On procède également à un recuit à 100°C sous vide pendant 1 heure. On dépose ensuite une couche de 2 à 3 µm d'une résine positive (FPM 210 par exemple) à partir d'une solution de toluène qui est recuite sous les mêmes conditions que précédemment. Cette couche de résine positive est irradiée par des rayons ultraviolets au travers d'un masque d'aluminium conçu de façon que la zone insolée de cette couche soit celle située au-dessus de la zone de confinement prévue. La résine insolée est ensuite éliminée et on dépose sous vide une couche d'aluminium de 200 angstrōms d'épaisseur. Entre la couche d'aluminium et le substrat conducteur (ou qui a été rendu superficiellement conducteur) on applique une tension de polarisation représentant un champ électrique de 1 MV/cm en même temps qu'une irradiation par rayons X. Toute la couche active est donc polarisée mais il n'y a que la partie de couche active non recouverte de résine qui est photoréticulée par les rayons X. La couche d'aluminium est éliminée par de la soude et le reste de résine FPM 210 est éliminé par du toluène. Par chauffage à une température d'environ 120°C pendant 1 heure, on dépolarise alors les zones non irradiées de la couche centrale. On a ainsi créé dans la couche centrale une zone polarisée donc d'indice plus élevé. Il ne reste plus qu'à déposer la couche supérieure, par exemple en FPM 210.

EXEMPLE 3

Dans cet exemple, on montre comment créer une zone d'indice plus élevé dans la couche inférieure.

On dépose à la tournette sur le substrat une solution de résine négative contenant 10 % d'un polymère à colorant aminonitrostilbène dans du 1,1,2 trichloroéthane. Le solvant est évaporé. La couche est alors irradiée par des rayons X d'énergie comprise entre 10 et 50 mJ/cm². Elle est ensuite insolée sous l'effet de rayons ultraviolets au travers d'un masque protégeant la zone guide. Cette insolation peut durer 1 heure et être réalisée au moyen d'une lampe au xénon de 250 W. Elle a pour objet de détruire le colorant dans les zones insolées. De cette façon, la zone non irradiée est une zone de fort indice. Les dépôts postérieurs de la couche active et de la couche supérieure sont ensuite réalisés. Sur la couche supérieure on dépose enfin une électrode guide en aluminium. Un champ électrique appliqué à la structure au moyen de cette électrode guide et du substrat conducteur (ou rendu superficiellent conducteur) permet de polariser localement la couche active.

EXEMPLE 4

L'exemple 4 concerne une structure tricouche utilisant un copolymère à base de cyanure de vinylidène et d'acétate de vinyle en proportion molaire 50/50 et que l'on peut désigner par le terme P(VDCN-VAc) et qui est soluble dans le diméthylformamide. Ce matériau a l'avantage de présenter une température de transition vitreuse très élevée (environ 180°C) et sa structure est composée à 50 % de forts dipôles C ≡ N qui lui confèrent des propriétés piézoélectriques et pyroélectriques lorsqu'ils ont été préalablement orientés sous champ électrique. La figure 15 représente ce copolymère. L'inconvénient de ce matériau est qu'il possède un indice très faible ($n \simeq 1{,}47$) et une efficacité et non-linéarité relativement faible ($d_{33}$ = 0, 6 pm/V à 1,06 µm) ce qui donne un coefficient électrooptique $r_{33}$ environ égal à 0,4 pm/V. Cependant, lorsque ce matériau est dopé par des colorants compatibles, il peut être utilisé avantageusement dans la structure tricouche selon l'invention.

On peut ainsi utiliser les dopants suivants :

- le 4 (N acétate d'éthylamino) nitrobenzène dont la formule est représentée à la figure 16 et qui présente un maximum d'absorption pour une longueur d'onde de 367 nm (spectre UV fait avec le chloroforme comme solvant),
- le 4 (N,N acétate de diéthanolamino) nitrobenzène dont la formule est représentée à la figure 17 et qui présente un maximum d'absorption pour une longueur d'onde de 378 nm (spectre UV fait avec le chloroforme comme solvant),
- le 4 (N acétate d'éthylamino) 4' nitrobiphényle dont la formule est représentée à la figure 18 et qui présente un maximum d'absorption pour une longueur d'onde de 374 nm (spectre UV fait avec le chloroforme comme solvant),
- le sulfure de 4 (nitrophényle) et d'acétate d'éthyle dont la formule est représentée à la figure 19 et qui présente un maximum d'absorption pour une longueur d'onde de 332 nm (spectre UV fait avec le chloroforme comme solvant)
- le 4 (dicyanovinyl) 4' (propanoyloxypipéridino) phényle dont la formule est représentée à la figure 20 et

qui présente un maximum d'absorption pour une longueur d'onde de 428,5 nm (spectre UV fait avec le chloroforme comme solvant).

La structure tricouche selon l'exemple 3 comprend une couche inférieure en P(VDCN-VAc) d'indice n = 1,47, une couche centrale du même copolymère mais dopée à un taux allant de 1 à 50 % en moles donnant ainsi un indice variant de 1,48 à 1,56 et une couche supérieure à base de résine commerciale FPM 210 (citée dans l'exemple 1) d'indice n = 1,42. Avant de déposer la couche centrale, la couche inférieure est durcie par recuit à 100°C pendant 1 heure pour éviter sa dissolution dans le solvant de la couche centrale

A titre d'exemple un copolymère P (VDCN - VAc) avec 25 % en moles de 4 (N acétate d'éthylamino) nitrobenzène dont la formule est représentée à la figure 16 a permis d'obtenir dans une structure du type de la figure 1 une tension de commande $v_\pi$ d'environ 80 volts, pour un coefficient $d_{33}$ de 2 pm/V et un coefficient $r_{33}$ d'environ 1 pm/V avec une absorption maximale à 370 nm. Dans ce cas, la structure tricouche était formée de couches de 2 µm d'épaisseur, déposées sur un substrat en silicium.

La zone d'indice plus élevée peut être obtenue dans la couche inférieure de la même façon que pour l'exemple 3.

EXEMPLE 5

L'exemple 5 concerne une structure tricouche selon l'invention utilisée en modulateur électrooptique et représentée à la figure 21.

Sur un substrat 10 recouvert d'une électrode 11 en ITO on a déposé successivement, côté électrode 11, trois couches référencées 12, 13 et 14 ayant chacune 2 µm d'épaisseur et une longueur de 1 cm. La couche inférieure 12 est formée à partir d'une résine négative sensible aux rayons X et son indice n vaut 1,5. La couche supérieure 14 est formée à partir d'une résine positive telle que celle commercialisée sous la référence FPM 210 citée plus haut et son indice n vaut 1,42. La couche centrale 13, d'indice n = 1,56, est constituée par le copolymère représenté à la figure 7 et que l'on a dopé avec 25 % en moles de colorant. Une électrode 15 en alumimium a été déposée sur la couche 14 pour appliquer entre elle et l'électrode 11 une tension de commande. Pour une absorption maximale située à 370 nm, sur un matériau polarisé à 80 V/µm autour de 100°C, la tension $v_\pi$ obtenue est de 70 volts. La même structure, réalisée avec les mêmes matériaux mais d'épaisseur totale 4 µm (chaque couche ayant la même épaisseur), devrait permettre d'obtenir une tension $v_\pi$ inférieure à 30 volts pour un champ de polarisation de 100 V/µm. En utilisant le même copolymère pour la couche centrale dopée à 50 % en poids de colorant et en optimisant les conditions de réalisation de la structure, on devrait obtenir une tension $v_\pi$ inférieure à 10 volts.

## Revendications

**1** - Composant optique pour applications en optique intégrée, ce composant étant élaboré sur un substrat (1), caractérisé en ce que le substrat supporte un empilement de trois couches polymères : une couche inférieure (2) déposée sur le substrat, une couche centrale (3) et une couche supérieure (4), les couches inférieure et supérieure possédant des indices optiques inférieurs à celui de la couche centrale qui est électrooptique et destinée à véhiculer un faisceau lumineux, au moins une couche, la couche centrale, la couche inférieure ou la couche supérieure, possédant des zones ayant des indices de valeurs différentes pour créer une zone de confinement (6) du faisceau lumineux dans la couche centrale (3).

**2** - Composant optique selon la revendication 1, caractérisé en ce que lesdites zones ayant des indices de valeurs différentes sont constituées par une partie irradiée et une partie non irradiée.

**3** - Composant optique selon la revendication 1, caractérisé en ce que lesdites zones ayant des indices de valeurs différentes sont constituées par une partie polarisée et une partie non polarisée.

**4** - Composant optique selon la revendication 1, caractérisé en ce que lesdites zones ayant des indices de valeurs différentes sont constituées par une partie dans laquelle on a inclus des colorants et une partie sans colorant.

**5** - Composant optique selon la revendication 2, caractérisé en ce que la couche inférieure (2) est formée à partir d'une résine négative sensible aux rayons X et la couche supérieure (4) à partir d'une résine positive.

**6** - Composant optique selon l'une des revendications 2 ou 5, caractérisé en ce que la couche centrale est formée par un polymère réticulable.

**7** - Composant optique selon l'une quelconque des revendications 1 à 6, caractérisé en ce que la couche centrale est dopée pour augmenter son indice.

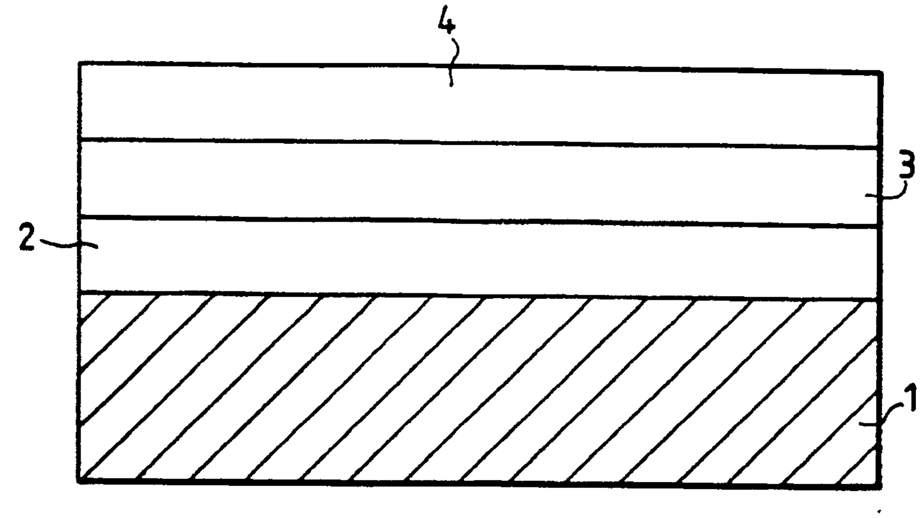


FIG.1

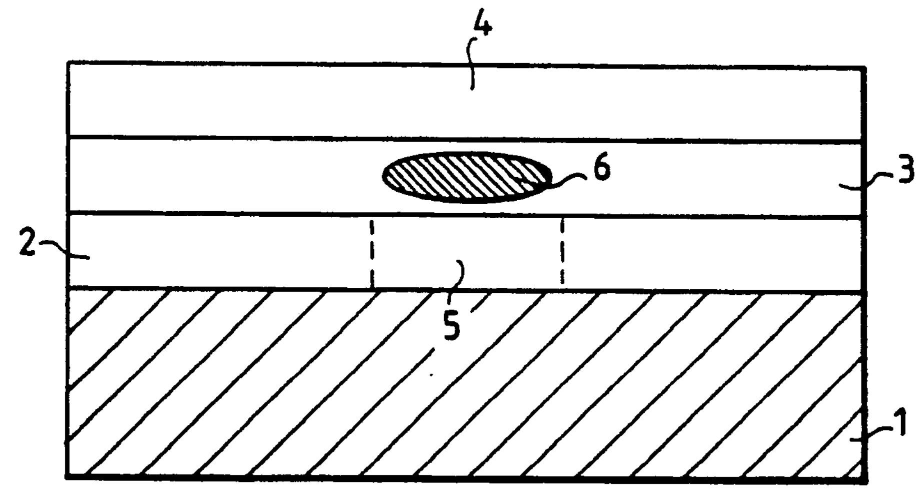


FIG.2

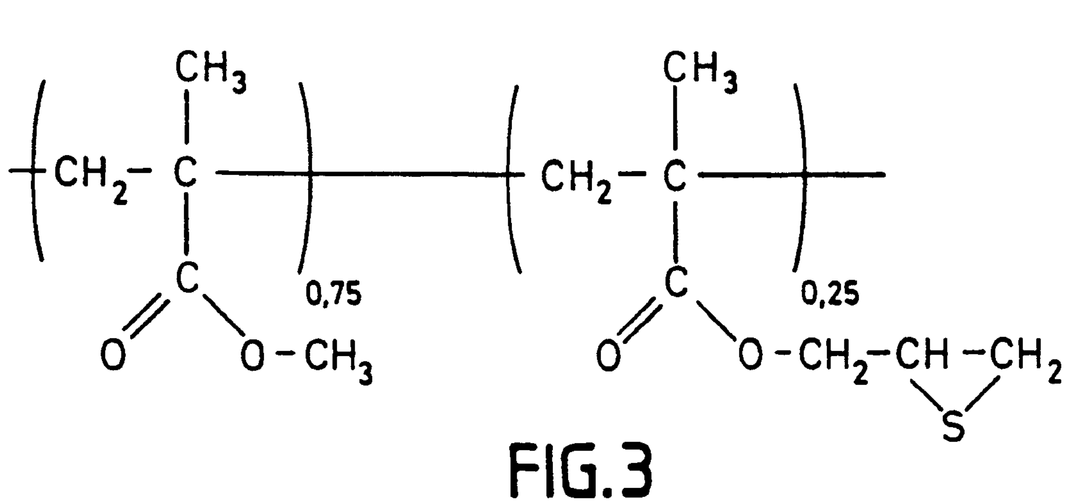

FIG.3

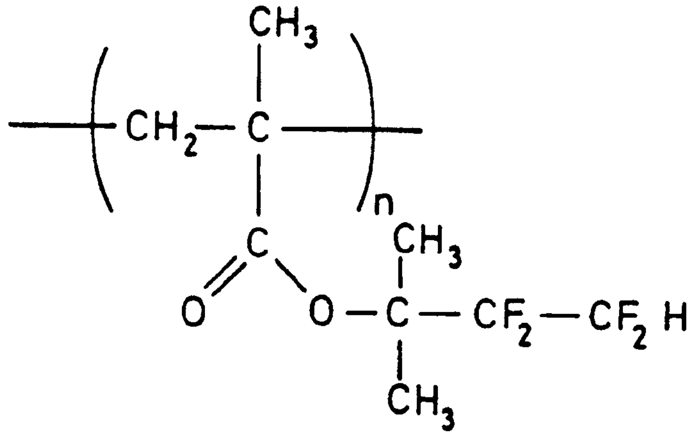

FIG. 4

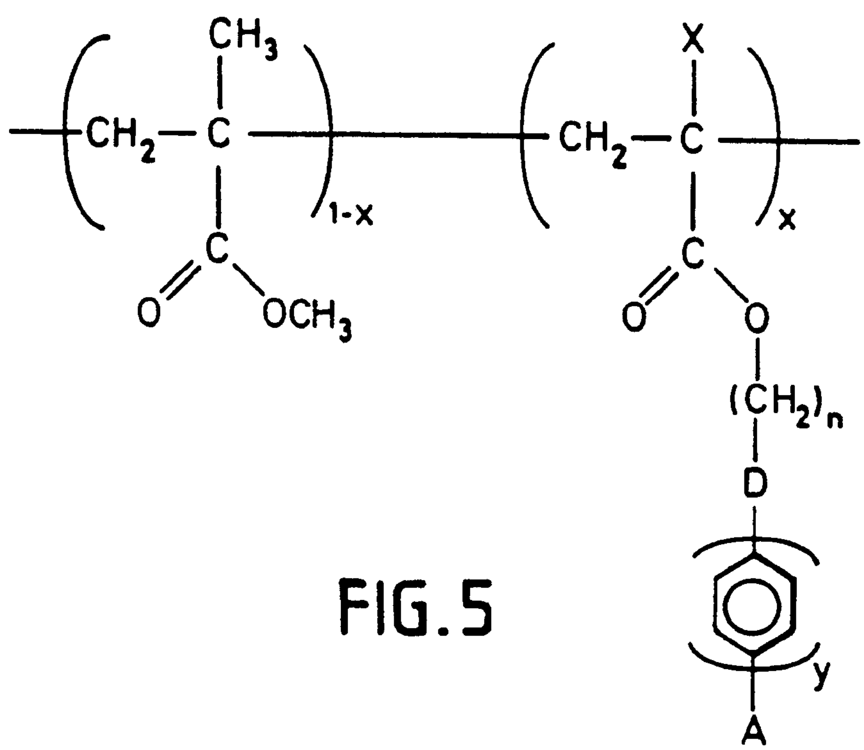

FIG. 5

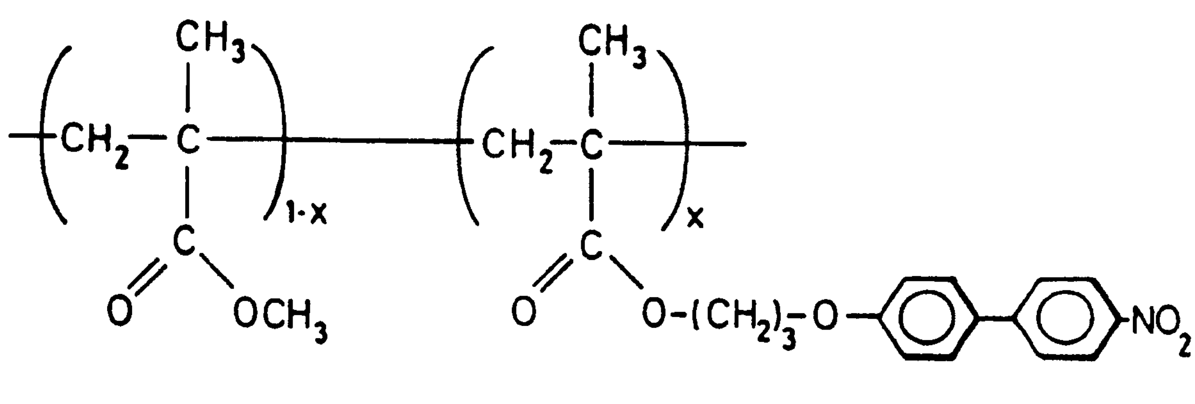

FIG. 6

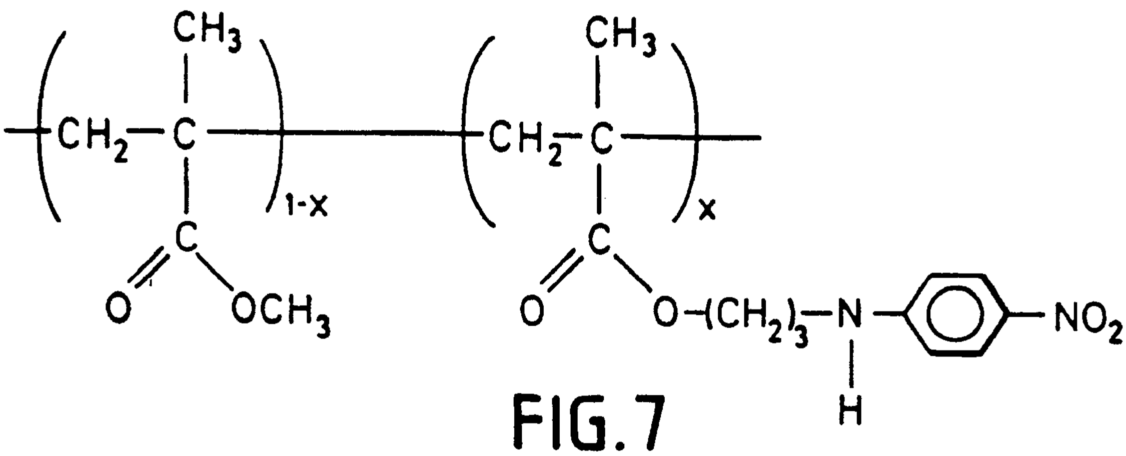

FIG.7

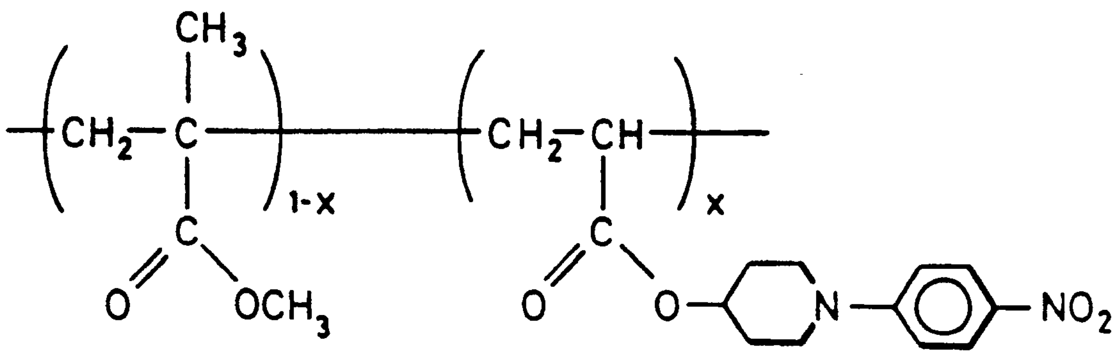

FIG.8

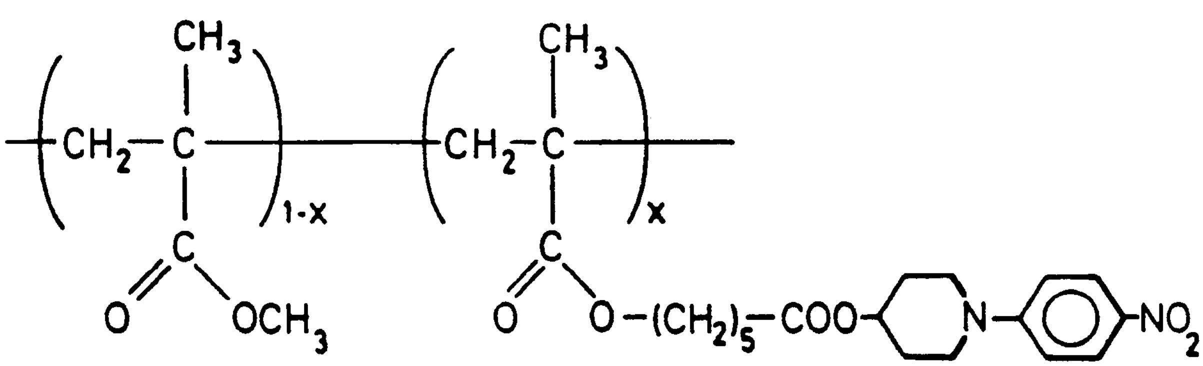

FIG.9

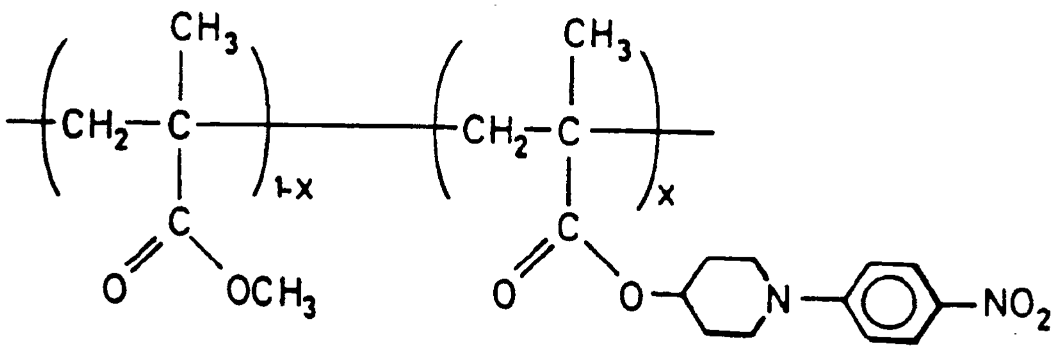

FIG.10

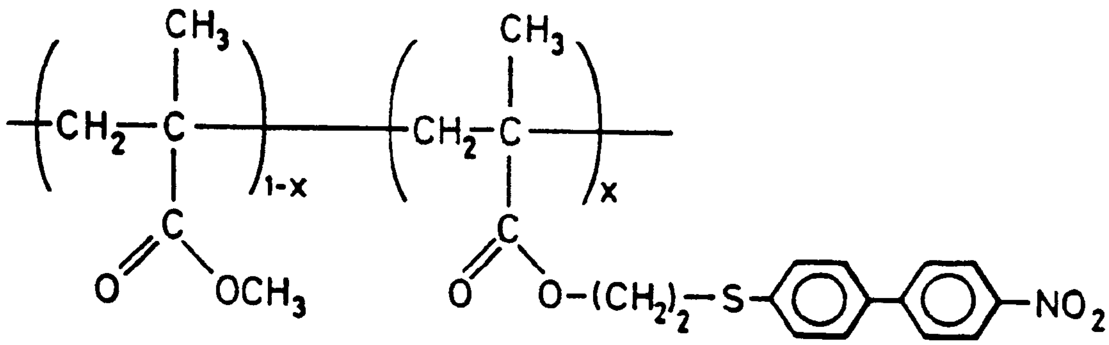

FIG.11

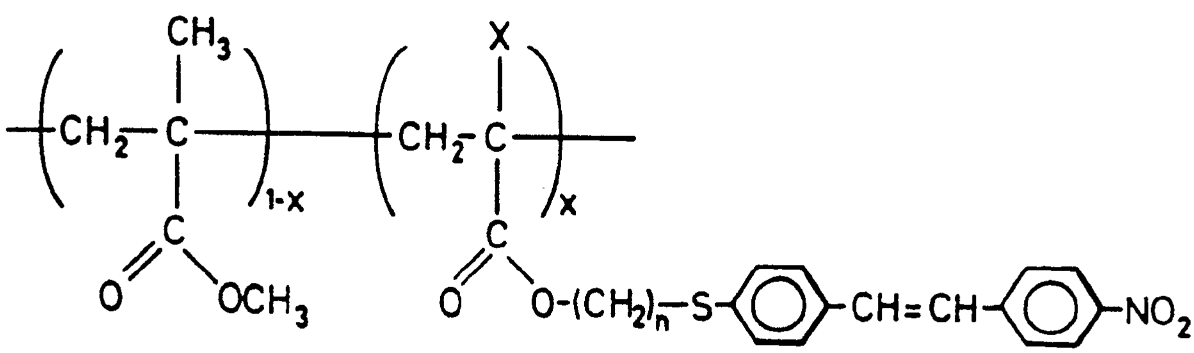

FIG.12

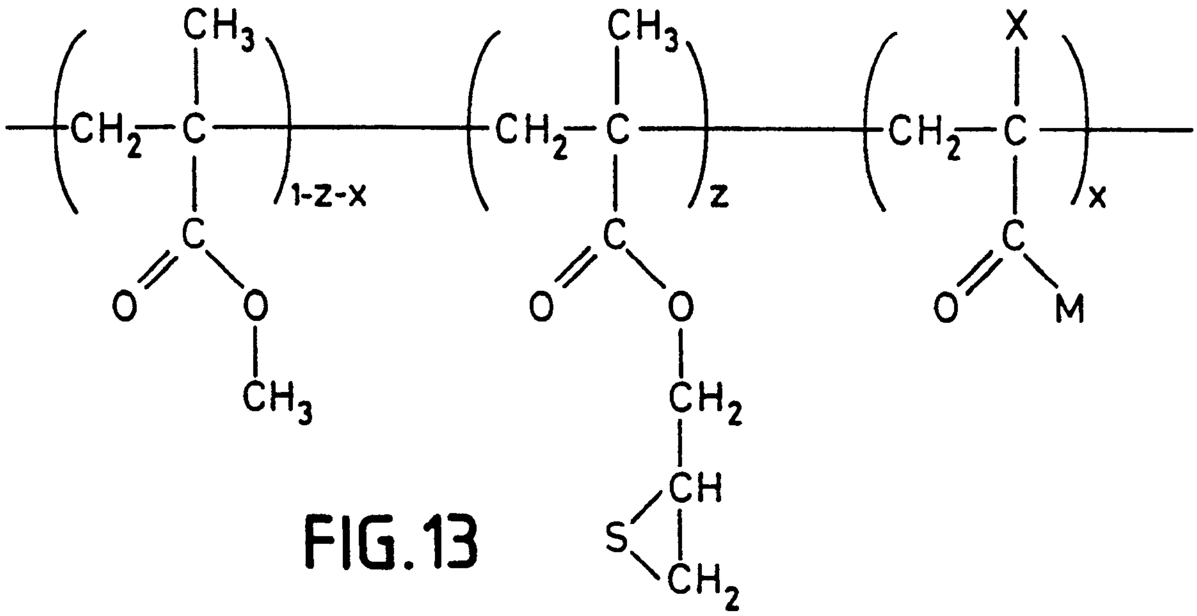

FIG.13

FIG.14

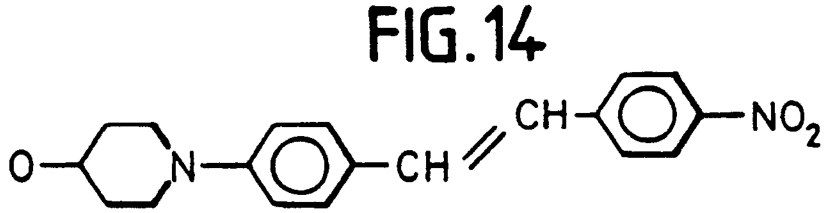

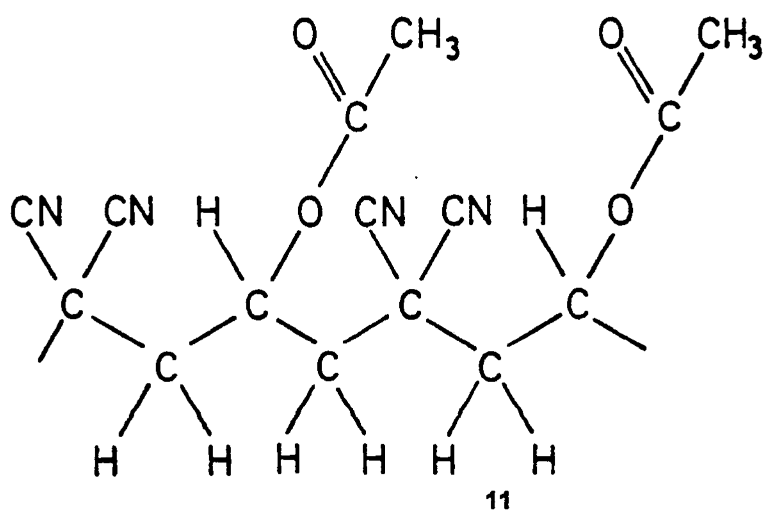

FIG.15

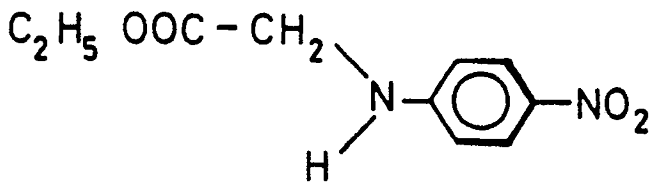

FIG.16

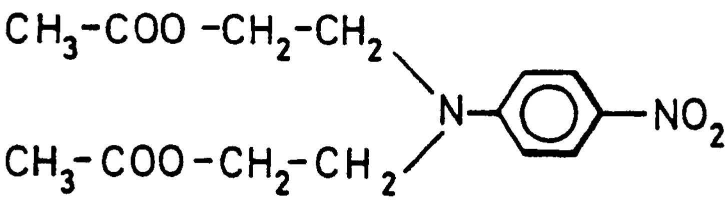

FIG.17

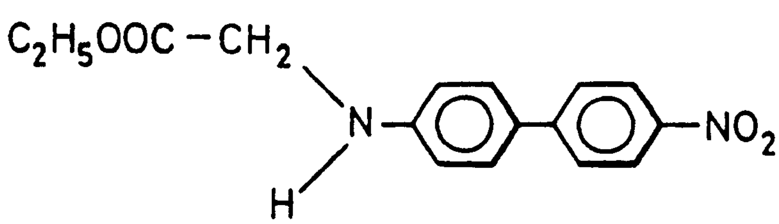

FIG.18

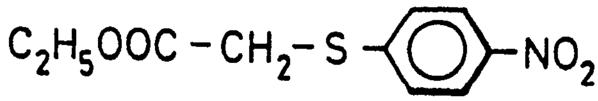

FIG. 19

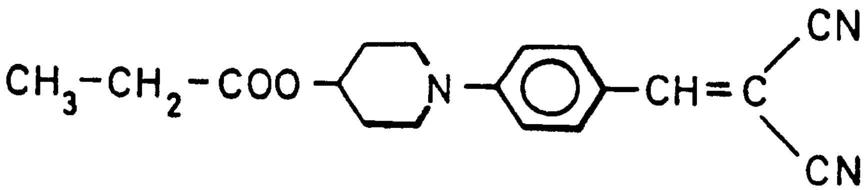

FIG. 20

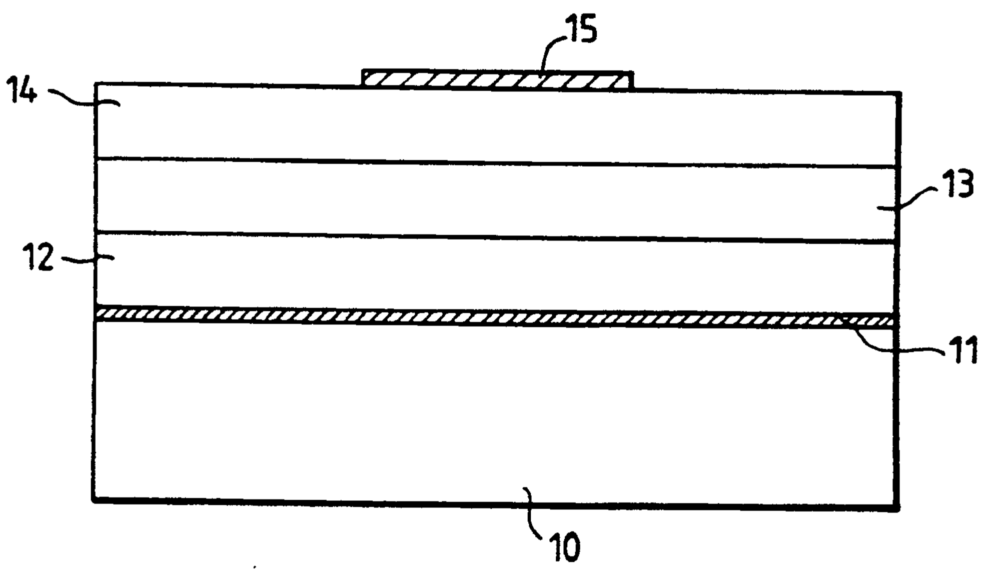


FIG.21

Office européen des brevets

# RAPPORT DE RECHERCHE EUROPEENNE

Numero de la demande

EP 91 40 0336

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,A | SPIE, vol. 971: Nonlinear optical properties of Organic Materials, 1988, pages 218-229, San Diego, CA, US; R. LYTEL et al.: "Organic electro-optic waveguide modulators and switches"<br>* Section 4 * | 1 | G 02 F 1/01 |
| A | SPIE, vol. 824: Advances in nonlinear polymers and inorganic crystals, liquid crystals, and laser media, 1987, pages 152-161, San Diego, CA, US; R. LYTEL et al.: "Advances in organic electro-optic devices"<br>* Whole document * | 1 | |
| A | APPLIED PHYSICS LETTERS, vol. 52, no. 13, 28 mars 1988, pages 1031-1033; J.I. THACKARA et al.: "Poled electro-optic waveguide formation in thin-film organic media"<br>* Whole document * | 1 | **DOMAINES TECHNIQUES RECHERCHES (Int. Cl.5)** |
| A | GB-A-2 191 603 (NORTHERN TELECOM LTD)<br>* Page 1, ligne 104 - page 2, ligne 63; figures 1-3 * | 1,2 | G 02 F 1/00 |

Le présent rapport a été établi pour toutes les revendications

| Lieu de la recherche | Date d'achèvement de la recherche | Examinateur |
|---|---|---|
| LA HAYE | 03-04-1991 | SARNEEL A.P.T. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)